(19) Europäisches Patentamt / European Patent Office / Office européen des brevets

(11) **EP 1 369 665 B1**

(12) **EUROPÄISCHE PATENTSCHRIFT**

(45) Veröffentlichungstag und Bekanntmachung des Hinweises auf die Patenterteilung:
**22.10.2008   Patentblatt 2008/43**

(51) Int Cl.:
*G01C 5/00* (2006.01)          *G08G 5/04* (2006.01)
*G05D 1/06* (2006.01)

(21) Anmeldenummer: **03012350.9**

(22) Anmeldetag: **30.05.2003**

(54) **Verfahren zur Vermeidung von Geländekollisionen für Luftfahrzeuge**

Method for avoiding aircraft terrain collisions

Procédé pour éviter des collisions d'aeronefs avec le terrain

(84) Benannte Vertragsstaaten:
**AT BE BG CH CY CZ DE DK EE ES FI FR GB GR HU IE IT LI LU MC NL PT RO SE SI SK TR**

(30) Priorität: **07.06.2002   DE 10225252**

(43) Veröffentlichungstag der Anmeldung:
**10.12.2003   Patentblatt 2003/50**

(73) Patentinhaber: **EADS Deutschland GmbH
85521 Ottobrunn (DE)**

(72) Erfinder:
• **Romahn, Stephan, Dr.
82825 München (DE)**
• **Walsdorf, Anton, Dr.
82008 Unterhaching (DE)**
• **Wischmann, Erik
89073 Ulm (DE)**

(74) Vertreter: **Meel, Thomas
Patentassessor,
c/o Dornier GmbH
LPI
88039 Friedrichshafen (DE)**

(56) Entgegenhaltungen:
**WO-A-92/21077          GB-A- 2 322 611
US-A1- 5 677 842          US-A1- 5 892 462
US-A1- 2001 023 390**

EP 1 369 665 B1

**Beschreibung**

Die Erfindung betrifft ein Verfahren zur Vermeidung von Geländekollisionen für Luftfahrzeuge.

Stand der Technik

Das derzeitige Standardsystem auf dem Gebiet der Bodenannäherungswarnsysteme für die Luftfahrt ist das TAWS (Terrain Awareness and Warning System - FAA TSO C151 A), früher auch bekannt unter der Bezeichnung Ground Proximity Warning System - GPWS. Das E-GPWS hat die Aufgabe, die Besatzung eines zivilen Flugzeugs vor Unfällen zu bewahren, welche durch den kontrolliertren Flug in das Gelände hervorgerufen werden. Neben den Kernfunktionen der Warnung vor Bodenannäherung umfasst das System Warnungen bezüglich kritischer Flughöhen, kritischer Fluglagen, und die Darstellung des Geländes auf einer Farbanzeige im Cockpit. Das genutzte Verfahren sucht unterhalb und im Raum vor dem Flugzeug nach kritischen Geländeerhebungen.
Zusätzlich zur Kernfunktion der Warnung vor bedrohlichen Geländeannäherungen werden Umweltdaten wie die Lage von Flugplätzen berücksichtigt und in deren Nähe an die Situation angepasste Warnungen generiert, welche aufgrund eines virtuellen Geländeprofils in Form eines gestuften Kegels das An- und Abflugprofil des Flugzeugs berücksichtigen.

Die Fähigkeit dieses Systems, Geländekollisionen zu erkennen, basiert auf einem Modell des Geländes, welche in einer Geländedatenbank gespeichert ist. Die Bewertung bezüglich eines drohenden Geländekonfliktes erfolgt auf Basis der ermittelten zukünftigen Flugbahn. Der zukünftige Flugverlauf wird über eine Prädiktion des Flugweges abgeschätzt. Diese wird hinsichtlich der Nähe zu einem Flughafen hin untersucht und gegebenenfalls wird dieser bei der Feststellung, ob ein Konflikt mit dem Gelände vorliegt, berücksichtigt.

Potentielle Ausweichmanöver werden unter Berücksichtigung der vorherrschenden Flugzeugleistung bestimmt. Da für potentielle Ausweichmanöver keine lateralen Kursänderungen in Betracht gezogen werden, können bei geplanten, sicheren Kurvenflugmanövern Warnungen bezüglich einer Geländekollision erfolgen, obwohl keine kritische Situation vorliegt.

Das bekannte System TAWS liefert ausreichende Leistung für geradlinige Flugbahnen, wie sie auch für zivile Anflugverfahren typisch sind. Jedoch die Einschränkung hinsichtlich lateraler Flugwegprädiktion und lateraler Ausweichmanöver schränkt das System im Nutzungsspektrum für hochdynamische Anwendungen, wie z.B. den taktischen Tiefflug ein, was im Folgenden noch näher diskutiert werden wird.

US 2001/0023390 beschreibt ein Verfahren zur Vermeidung von Geländekollisionen für Luftfahrbeuge, wobei ein Mehrzahl von potentiellen Flugbahnen ausgewertet wird zur Bestimmung möglicher Geländekollisionen. Die potentiellen Flugbahnen sind als baumartige Struktur ausgebildet.

Defizite des Standes der Technik

1. Berücksichtigung von Tiefflugverfahren

Für militärische Lufteinsätze unter feindlicher Bedrohung ist ein risikominimaler Flugweg wünschenswert. Die Risikominimierung wird hierbei durch verschiedene Vorgehensweisen erzielt. Kommunikationslinien (Straßen, Eisenbahnlinien, etc.) werden gemieden oder nur in steilen Winkeln passiert, der Flug über größere Wasserflächen oder Ebenen wird aus Gründen des signifikanten Schattenrisses am Boden vermieden und eine erhöhte Radarsignatur wird minimiert. Der Flug findet vorzugsweise bodennah unter Ausnutzung der Geländecharakteristiken statt. Hierdurch können Abschattungseffekte durch Hügel, Bergketten und Täler effizient ausgenutzt werden und die Erfassung durch feindliche Boden-Luft-Raketenstellungen und deren Radarsysteme umgangen werden.

Aus diesen beispielhaft aufgeführten Vorgehensweisen im Rahmen des militärischen Tieffluges resultiert eine risikominimale Flugroute welche einem Tal so lange wie möglich folgt. Der Flug entlang der Hangkanten eines Tales unter Einhaltung von Geländefreiheit und einer möglichen kommandierten Marschgeschwindigkeit bedarf zahlreicher Steuereingaben des Piloten.

Geländewarnsysteme für solche militärischen Operationen müssen solche Strategien in ihrer Arbeitsweise berücksichtigen, so dass sowohl das Einschätzen der Situation mit dem damit verbundenen Erkennen von möglichen Gefahren den militärtaktischen Verfahren entspricht.

2. Ausschluss von verpassten Warnungen

Aufgabe von Geländewarnsystemen ist es, den Piloten vor sogenannten kontrollierten Flügen in das Gelände zu schützen. Geländewarnsysteme stellen die letzten Sicherheitsreserven dar, die die Kollision mit dem Gelände durch rechtzeitige Warnungen und Empfehlung von sicheren Ausweichmanövern noch verhindern können. Aus diesem Grund ist es unerlässlich, dass die Wahrscheinlichkeit für das Verpassen einer Warnung von einem Geländewarnsystem nahezu auf Null reduziert werden muss.

Geländewarnsysteme verfügen in der Regel über zwei (selten auch über drei) Alarmarten: Vorwarnung, Warnung, und Hinweise (optional). Aufgrund der Tatsache, dass eine verpasste Vorwarnung nicht annähernd so kritisch ist wie es eine verpasste Warnung wäre, findet man in den Spezifikationen für Geländewarnsysteme normalerweise die Forderung, dass verpasste Vorwarnungen auf ein Mindestmaß beschränkt, verpasste Warnungen jedoch gänzlich auszuschließen sind.

### 3. Vermeiden von Fehlalarmen

Warnsysteme, welche dazu neigen, Warnungen zu oft in Situationen zu liefern, die offensichtlich keine Gefahr in sich bergen, werden über kurz oder lang die Akzeptanz des Piloten verlieren. Hieraus resultiert sogar die Gefahr, dass Piloten sich an die Warnungen gewöhnen und nur noch langsam oder gar nicht auf diese Warnungen reagieren, was dann in Situation mit einer berechtigten Warnung zu einem kontrollierten Flug in das Gelände (Geländekollision) führen kann. Aus diesem Grunde ist es notwendig, das Auftreten von Fehlalarmen so weit wie möglich zu reduzieren.

Geländewarnsysteme sind aufgrund der Tatsache, dass sie Annahmen über den weiteren Flugverlauf treffen, die untersuchten Ausweichflugwege auf Untersuchungen bezüglich einer schlimmsten, anzunehmenden Situation basieren und zahlreiche Sicherheitsgrenzen in Betracht ziehen, für Fehlalarme typischerweise sehr anfällig. Zum Beispiel ein klassisches Geländewarnsystem auf Basis eines Radarhöhenmessers wird eine Warnung generieren, wenn sich das Flugzeug einer Bergspitze nähert und nur leicht über die Bergspitze hinwegsteigt, oder im Anflug auf einen Berg befindet, auch wenn die Besatzung das Abdrehen des Steuerkurses kurz von Erreichen des Berges beabsichtigt. In beiden Fällen werden Fehlalarme generiert, da das System über kein Wissen über a) das Gelände im vorausliegenden Flugbereich und über b) die verfolgten Absichten des Piloten verfügt. Spezifikationen von Geländewarnsystemen fordern oftmals eine gleiche Stufe der Wahrscheinlichkeit eines Fehlalarms für die Vorwarnung wie für die Warnung.

### 4. Rechtzeitigkeit der Meldungen

In Unfalluntersuchungen hat sich gezeigt, dass klassische TAWS (Terrain Awareness and Warning System) nicht in der Lage waren, Warnungen rechtzeitig der Besatzung mitzuteilen und diese dadurch vor einer drohenden Geländekollision zu warnen. Dies lag darin begründet, dass das klassische TAWS sich alleine auf den Sensor »Radar-Höhenmesser" stütze, der bei steilen Anflügen und hohen Sinkraten bezüglich eines Geländes versagte. Eine Warnung ist daher einer Besatzung nur dann hilfreich, wenn diese so zeitgerecht gegeben wird, dass ein Ausweichmanöver eingeleitet und erflogen werden kann.

### 5. Eignung der Ausweichflugwege zur Flugführung

Flugführung bedeutet einer gewünschten Flugbahn zu folgen. In zivilen Flugzeugen vermittelt das "Primary Flight Display" (PFD) dem Piloten entsprechende Information bezüglich des gegenwärtigen Flugzustandes. Mit steigendem Automationsgrad jedoch gelangen mehr und mehr Systeme zur Unterstützung des Piloten für das Einhalten dieser Parameter ins Cockpit. Zulassungsrichtlinien (siehe FAA "TSO C151A: Minimum operational performance standards of a Terrain Awareness and Warning System (TAWS)) fordern, dass Flugführungsinformationen zum Einhalten einer vorgeschlagenen Ausweichflugbahn der Cockpitbesatzung dargeboten werden sollen. Hieraus resultiert die Anforderung, dass eine ermittelte Ausweichflugbahn in der Art und Weise beschaffen sein muss, dass sie einer Präsentation im Sinne von Flugführungsinformationen genügt.

Aufgabe der Erfindung ist es deshalb, ein Verfahren zur Vermeidung von Geländekollisionen für Luftfahrzeuge zu schaffen, mit dem die vorgenannten Defizite des Standes der Technik überwunden werden können. Insbesondere soll mit dem Verfahren ein für militärische Einsätze möglichst effektiver, bodennaher Flug innerhalb der Bodenhinderniskulisse gewährleistet werden.

Diese Aufgabe wird mit dem Gegenstand des Patentanspruch 1 gelöst. Vorteilhafte Ausgestaltungen des erfindungsgemäßen Verfahrens sowie eine Vorrichtung zur Durchführung des Verfahrens sind Gegenstand weiterer Ansprüche.

Die Erfindung wird im Folgenden anhand eines konkreten Ausführungsbeispiels unter Bezugnahme auf Figuren näher erläutert. Es zeigen:

Fig. 1     eine Mehrzahl von Flugbahnen in Form einer baumartigen, hiearchischen Struktur (Fan-Tree) zur Erzeugung von potentiellen Ausweichflugwegen nach dem erfindungsgemäßen Verfahren;

Fig. 2     ein Beispiel für ein einzelnes Fan-Tree-Segment aus fünf Flugbahnen nach dem erfindungsgemäßen Verfahren;

Fig. 3     ein Flussdiagramm zur Generierung eines Fan-Trees nach dem erfindungsgemäßen Verfahren;

Fig. 4     eine Darstellung zur Veranschaulichung der Kollisionsprüfung für eine einzelne Flugbahn mit dem darunterliegenden Gelände nach dem erfindungsgemäßen Verfahren;

Fig. 5     ein Diagramm zur Veranschaulichung der Suche nach einem sicheren Ausweichflugweg nach dem erfindungsgemäßen Verfahren;

Fig. 6     ein Flussdiagramm zur Ablauf des erfindungsgemäßen Verfahrens.

Wesentliches Element des erfindungsgemäßen Verfahrens ist Fähigkeit, während des Fluges den aktuellen Flugweg hinsichtlich möglicher Geländekollisionen unter Berücksichtigung der für den Tiefflug charakteristischen, insbesondere kurvenreichen Flugbahnen zu prüfen.

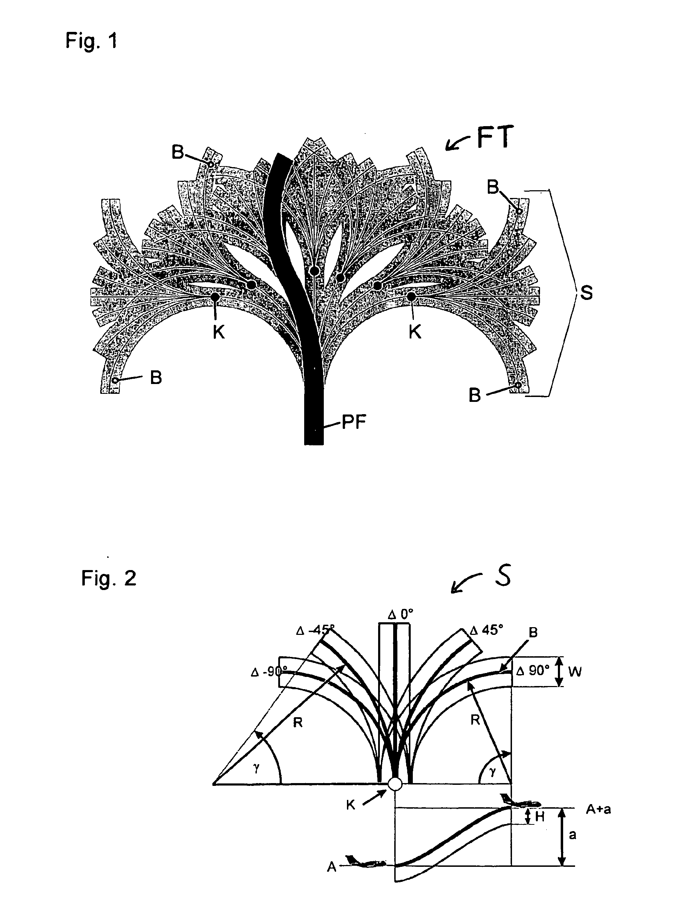

Das erfindungsgemäße Verfahren untersucht hierzu eine Vielzahl von charakteristischen Flugbahnen B (Fig. 1), wobei die Gesamtheit dieser Flugbahnen eine baumartige, hierarchische Struktur bilden, innerhalb derer Flugbahnen über Verzweigungsknoten K verbunden sind, wobei eine Sequenz von über Knoten K verbundener Flugbahnen B aufeinander folgender Hierarchiestufen einen potentiellen Ausweichflugweg bilden. Die Hierarchiestufe einer Flugbahn innerhalb des Fan-Tree ist dabei durch die Zahl der Verzweigungsknoten festgelegt, die vom Ursprung des Fan-Trees aus zu durchlaufen sind, bis man zu dieser Flugbahn gelangt. Die baumartige, hierarchische Struktur der Flugbahnen wird hier als Fan-Tree FT bezeichnet. Die Flugbahnen und der daraus aufgebaute Fan-Tree werden der momentanen Flugleistung des Fluggerätes und dessen Flugführungsautomaten angepasst.

Hierdurch wird sichergestellt, dass in jeder Situation das Erfliegen des empfohlenen Ausweichflugwegs entweder durch den Operateur, durch einen Automaten oder halbautomatisch vom Operateur mit Unterstützung eines Automaten möglich ist.

Das Verfahren beginnt mit einer Prädiktion des Flugweges, wobei die Prädiktion sowohl ausschließlich auf dem momentanen Flugzustand oder auch mit Hilfe des aktiven Flugplanes erfolgen kann. Der prädizierte Flugweg ist in Fig. 1 mit Bezugszeichen PF bezeichnet.

Generierung des Fan-Trees

Der Fan-Tree setzt sich aus einer Anzahl von gleichförmigen, für den Tiefflug charakteristischen, Flugbahnen B (Fig. 1) zusammen, welche manuell oder durch einen Automaten abgeflogen werden können. Flugbahnen derselben Hierarchiestufe, die von demselben Verzweigungsknoten K ausgehen, werden zu einem Fan-Tree-Segment S zusammengefasst. Die Anzahl der pro Segment enthaltenen Flugbahnen richtet sich nach der Flugleistung des Fluggerätes und den Anforderungen an die Vielzahl der Ausweichbahnen.

Ein solches Fan-Tree-Segment S, in diesem Beispiel bestehend aus einer geradlinigen Steigflugbahn und vier gekurvten Flugbahnen, ist in Fig. 2 dargestellt. Sie zeigt die fünf Flugbahnen in einer Ansicht von oben, sowie eine der Flugbahnen zusätzlich in Seitenansicht. Die Flugbahnen eines Fan-Tree-Segments S werden auf der Basis der momentanen Flugleistung des Fluggerätes erzeugt. Die Flugleistung eines Fluggeräts während eines Einsatzes ist typischerweise nicht konstant, sondern ändert sich während eines Einsatzes, z.B. aufgrund Treibstoffverbrauch, Abschuss von Flugkörpern etc..

Die gekurvten Flugbahnen entsprechen den Flugabschnitten heutiger Flugführungsautomaten. Damit ist gewährleistet, dass diese Flugbahnen von einem Operateur, von einem Automaten oder vom Operateur mit Unterstützung eines Automaten abgeflogen werden können. Die gekurvten Flugbahnen sind durch einen Kurvenradius R und eine resultierende Kursänderung γ = -90°, -45°, +45°, +90° beschrieben. Die beiden äußersten Flugbahnen, welche in dem gezeigten Beispiel jeweils in einer 90° Kursänderung resultieren, korrespondieren mit einem Kurvenflug unter Ausnutzung der maximalen Kurvenflugleistung mit minimalem Kurvenradius im aktuellen Flugzustand. Sowohl die äußeren als auch die inneren Flugbahnen besitzen die gleiche Flugzeit t, so dass bei konstanter Geschwindigkeit die zurückgelegte Strecke über jede einzelne Flugbahn des Fan-Tree-Segments konstant ist. Für jede Flugbahn sind Sicherheitsgrenzen sowohl lateral als auch vertikal zu definieren. Der laterale Sicherheitsabstand sei $W$, der vertikale Sicherheitsabstand sei $H$. Jede einzelne Ausweichflugbahn eines Fan-Tree-Segments führt zu einem Höhengewinn a des Fluggerätes, welcher aus den Flugleistungen des Fluggerätes für ein solches Manöver resultiert, wobei der Höhengewinn der gekrümmten Flugbahnen aufgrund der hierbei reduzierten Steigleistung des Fluggerätes geringer ausfällt als es für das geradlinige Steigmanöver der Fall ist.

Ein potentieller Ausweichflugweg setzt sich aus mehreren, nacheinander durchflogenen Flugbahnen zusammen. Unter der Bedingung, dass nach Durchfliegen eines potentiellen Ausweichflugwegs zumindest die Sicherheitsmindesthöhe MSA erreicht werden muss, ergibt sich die Tiefe $k$ des Fan-Trees (Anzahl der Hierarchieebenen oder äquivalent: Anzahl der durchflogenen Fan-Tree-Segmente) aus folgender Gleichung:

$$\sum_{l=1}^{k} a_l = \text{MSA} - \text{A}$$

wobei A die aktuelle Flughöhe und $a_l$ der Höhengewinn beim Durchfliegen einer einzelnen Flugbahn bezeichnet.

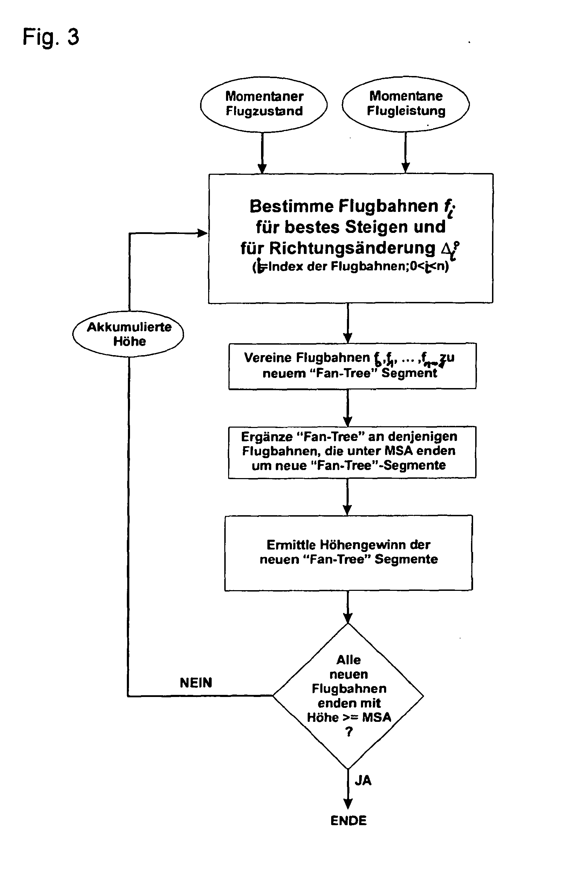

Bei der Erzeugung eines Fan-Trees werden also an den Enden derjenigen Flugbahnen, die unterhalb von MSA enden, jeweils neue Fan-Tree-Segmente angehängt, solange bis MSA erreicht ist. Dabei handelt es sich immer um das gleiche Fan-Tree-Segment, d.h. bestehend aus der gleichen Gruppe von Flugbahnen. Anders ausgedrückt: an jedem Knoten innerhalb des aktuell erzeugten Fan-Trees geht die gleiche Gruppe von Flugbahnen aus. Das Verfahren zur Erzeugung des Fan-Tree ist in Fig. 3 in einem Flussdiagramm dargestellt.

Prüfung der Flugbahnen auf kritische Geländeannäherungen

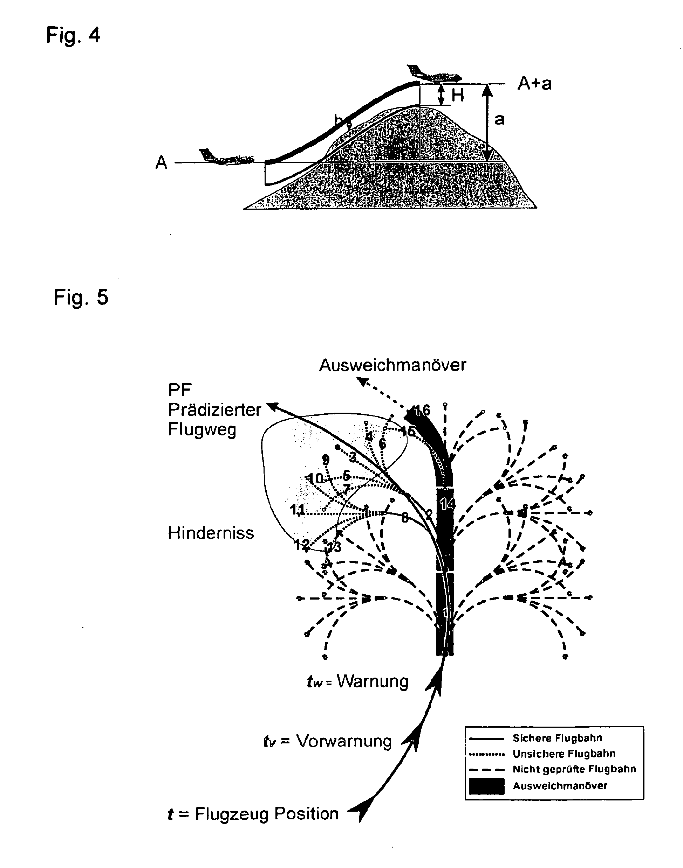

Das erfindungsgemäße Verfahren untersucht im Rahmen der Konflikterkennung die Flugbahnen danach, ob sie im Konflikt mit dem darunter liegenden Gelände steht, d.h. ob eine gefährliche Bodenannäherung vorliegt. Die zu prüfende Flugbahn wird mit einem Modell des Geländes verschnitten (siehe Fig. 4). Eine Situation der Bodenannäherung resultiert aus einer kritischen Distanz h über eine Breite W zwischen Fluggerät und Boden.

Die Logik der Konflikterkennung basiert auf folgenden Regeln:

WENN h <= H(W) DANN flugbahn.zustand == unsicher ENDE

WENN h > H(W) DANN flugbahn.zustand == sicher ENDE

Prüfung der potentiellen Ausweichflugwege auf kritische Geländeannäherungen

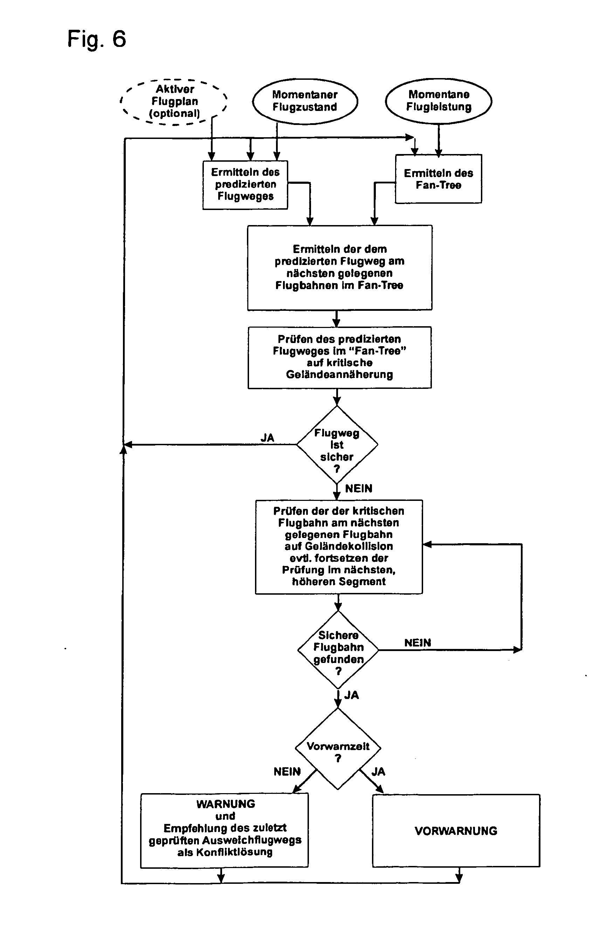

Das übergreifende Vorgehen zur Konflikterkennung ist in Fig. 6 in Form eines Ablaufdiagramms dargestellt und wird im folgenden unter Bezugnahme auf Fig. 5 erläutert.

Die Untersuchung des Fan-Tree beginnt auf der Basis des prädizierten Flugweges PF. Der prädizierte Flugweg kann sowohl auf einer Vorhersage des Flugverlaufs auf Basis des momentanen Flugzustandes basieren als auch dem momentan aktiven Flugplan entsprechen.

Zunächst werden diejenigen Verzweigungs-Knoten derjenigen Fan-Tree-Segmente ermittelt, die dem prädizierten Flugweg am nächsten liegen. Hieraus ergibt sich eine Sequenz an Flugbahnen innerhalb verschiedener Fan-Tree-Segmente, die einen vollständigen Ausweichflugweg darstellen, die spätestens nach Erreichen der Fan-Tree-Tiefe *k* endet. Diese Sequenz von Flugbahnen wird nun hinsichtlich möglicher Geländeannäherungen untersucht (Schritte 1-3 in Fig. 5). Wird der Endpunkt dieser Sequenz erreicht, ohne dass ein Konflikt mit dem Gelände festgestellt wurde, so wird die Flugsituation als sicher klassifiziert. Für den Fall, dass die Flugbahn als unsicher bestimmt wurde, ist eine sichere Flugbahn für ein Ausweichmanöver durch eine geeignete Lösungssuche zu finden.

Der Teilprozess der Lösungssuche (Schritte 4-7 in Fig. 5) untersucht zunächst diejenigen Flugbahnen, welche einer sich im Geländekonflikt befindlichen Flugbahn am nächsten gelegen sind, in einer "die-Nächstgelegene-zuerst"-Reihenfolge. Sollten auch alle weiteren Flugbahnen des untersuchten Segments im Konflikt mit dem Gelände stehen, so wird die Lösungssuche in dem Fan-Tree-Segment der nächsthöheren Hierarchieebene fortgeführt, wobei von dort aus auch eine Suche in hierarchisch tiefergelegenen Segmenten durchgeführt werden kann (Schritte 2, 8-16). Dies geschieht solange bis ein konfliktfreier Ausweichflugweg (in Fig. 5 als breite Bahn eingezeichnet und als »Ausweichmanöver" bezeichnet) ermittelt wurde.

In Fig. 5 bezeichnen die durchgezogenen Linien sichere Flugbahnen, gepunktete Linien bezeichnen unsichere Flugbahnen. Nicht geprüfte Flugbahnen sind gestrichelt dargestellt.

Die Warnung aufgrund einer gefundenen Lösung zerfällt in zwei Teilprozesse: »Vorwarnung" und »Warnung". »Vorwarnung" und »Warnung" unterscheiden sich hinsichtlich der kritischen, verbleibenden Zeit bis zum Einleiten eines Ausweichmanövers. »Vorwarnungen" resultieren aus einem erkannten Geländekonflikt der durch den prädizierten Flugweg ermittelten Flugbahnen im Fan-Tree zu einem relativ frühen Zeitpunkt. »Warnungen" erfolgen zu einem Zeitpunkt, der durch eine relativ kurze Reaktionszeit bis zum Einleiten eines Ausweichmanövers charakterisiert ist. "Warnungen" sind mit der Kommandierung einer Ausweichflugbahn verbunden, die der ersten sicheren ermittelten Flugbahn im Fan-Tree entspricht.

Vorteile der erfindungsgemäßen Lösung

- Die im Rahmen des erfindungsgemäßen Verfahren hinsichtlich eines drohenden Geländekonfliktes geprüfte große Anzahl an möglichen Ausweichflugwegen stellt sicher, dass eine WarnungNorwarnung nur in solchen Situationen erzeugt wird, in der das Flugzeug nahezu keine andere als die kommandierte Möglichkeit der Geländekollisionsvermeidung mehr hat.

- Die Kombination von geradlinigen und gekrümmten Flugbahnen zu einem Fan-Tree-Segment verleiht dem System die Fähigkeit, kurvenreiche Flugwege zu untersuchen. Damit werden all diejenigen Fehlwarnungen unterdrückt, die klassische Systeme wie das GPWS während des dynamischen Tieffluges in einem kurvenreichen Tal erzeugen würde.

- Das erfindungsgemäße Verfahren rechnet mit einem hoch dynamischen, also kurvenreichen Flug. Das bedeutet, dass mit dem Verfahren die Strategien des militärischen Tieffluges berücksichtigt und die Anzahl an Fehlalarmen in diesen Flugabschnitten drastisch reduziert werden.

- Durch geeignete Ausbildung der Fan-Tree-Segmente wird gewährleistet, dass alle ermittelten Ausweichflugwege stets eine Fortsetzung des bodennahen Fluges innerhalb der Bodenhinderniskulisse und unter Berücksichtigung der Geländedeckung sind. Ein Steigmanöver aus der Geländedeckung heraus, welches den taktischen Randbedingungen eines militärischen Tieffluges widersprechen würde, wird hierdurch vermieden.

- Durch die Ausbildung der Fan-Tree-Segmente als von einen Automaten erfliegbare Flugbahnen ist es möglich, die ermittelten Ausweichflugwege sowohl von einem Operator, einem Automaten oder halbautomatisch von einem Operateur mit Unterstützung eines Automaten abfliegen zu können.

- Das Suchen nach einem Ausweichflugweg innerhalb des Fan-Trees unter Bezug auf den vorhergesagten oder vorgeplanten Flugweg stellt sicher, dass die Abweichung vom vorhergesagten oder vorgeplanten Flugweg während des Ausweichmanövers minimal ist.

**Patentansprüche**

1. Verfahren zur Vermeidung von Geländekollisionen für Luftfahrzeuge mit folgenden Verfahrensschritten:

   - Generierung einer Mehrzahl von Flugbahnen (B), welche auf der Basis der momentanen Flugleistung des Luftfahrzeugs generiert werden, wobei die Gesamtheit der Flugbahnen (B) eine baumartige, hierarchische Struktur (FT) bilden, innerhalb derer Flugbahnen über Verzweigungsknoten (K) verbunden sind, wobei eine Sequenz von über Verzweigungsknoten (K) verbundener Flugbahnen (B) aufeinander folgender Hierarchiestufen einen potentiellen Ausweichflugweg bilden und wobei an jedem Knoten die gleiche Gruppe (S) von Flugbahnen (B) ausgeht,
   - Prüfung der potentiellen Ausweichflugwege auf kritische Geländeannäherung unter Rückgriff auf die Daten eines Geländemodells, bis ein sicherer Ausweichflugweg ermittelt ist,
   - nach Ermittlung eines sicheren Ausweichflugwegs wird eine Warnung mit oder ohne Empfehlung eines Flugwegs auf der Basis des zuletzt ermittelten sicheren Ausweichflugwegs ausgegeben.

2. Verfahren nach Anspruch 1, **dadurch gekennzeichnet, dass** die Reihenfolge der Prüfung der potentiellen Ausweichflugwege auf kritische Geländeannäherung unter Anwendung folgender kriterien erfolgt:

   - Ausweichflugwege, die dem voraussichtlichen Flugweg des Fluggeräts am nächsten liegen, werden zuerst geprüft,
   - wird ein Ausweichflugweg als unsicher erkannt, so wird die Prüfung mit dem diesem am nächsten gelegenen potentiellen Ausweichflugweg fortgesetzt.

3. Verfahren nach Anspruch 1 oder 2, **dadurch gekennzeichnet, dass** die Flugbahnen (B) derart generiert werden, dass sie eine für militärische Einsätze möglichst effektiven, bodennahen Flug innerhalb der Bodenhinderniskulisse unter Berücksichtigung der Geländedeckung gewährleisten.

4. Verfahren nach einem der vorangehenden Ansprüche, **dadurch gekennzeichnet, dass** die Flugbahnen (B) derart generiert werden, dass sie sowohl von einem Operateur, von einem Automaten oder halbautomatisch von einem Operateur mit Unterstützung eines Automaten abgeflogen werden können.

5. Verfahren nach einem der vorangehenden Ansprüche, **dadurch gekennzeichnet, dass** die Flugbahnen (B) derart generiert werden, dass sie dieselbe Flugdauer aufweisen.

6. Verfahren nach einem der vorangehenden Ansprüche, **dadurch gekennzeichnet, dass** die von demselben Verzweigungsknoten ausgehenden Flugbahnen (B) derselben Hierarchiestufe derart generiert werden, dass sie unterschiedliche Richtungsänderungen zwischen -90 und +90 Grad aufweisen.

7. Gerät zur Durchführung des Verfahren nach einem der vorangehenden Ansprüche zur Vermeidung von Geländekollisionen für Luftfahrzeuge, mit folgendem Aufbau:

   - einer Einheit zur Generierung einer Mehrzahl von Flugbahnen (B), welche auf der Basis der momentanen Flugleistung des Luftfahrzeugs generiert werden, wobei die Gesamtheit der Flugbahnen eine baumartige, hierarchische Struktur (FT) bilden, innerhalb derer Flugbahnen (B) über Verzweigungsknoten verbunden sind, wobei eine Sequenz von über Verzweigungsknoten verbundener Flugbahnen (B) aufeinander folgender Hierarchiestufen einen potentiellen Ausweichflugweg bilden und wobei an jedem Knoten die gleiche Gruppe (S) von Flugbahnen (B) ausgeht,
   - einer Speichereinheit, die Daten eines Geländemodells des überflogenen Gebiets enthält,
   - einer Einheit zur Prüfung der potentiellen Ausweichflugwege auf kritische Geländeannäherung unter Rückgriff auf die in der Speichereinheit enthaltenen Daten des Geländemodells, bis ein sicherer Ausweichflugweg ermittelt ist,
   - einer Warneinheit, mit der nach Ermittlung eines sicheren Ausweichflugwegs eine Warnung mit oder ohne Empfehlung eines Flugwegs auf der Basis des zuletzt ermittelten sicheren Ausweichflugwegs ausgegeben werden kann.

**Claims**

1. Method for preventing aircraft from colliding with the terrain, having the following method steps:

   - generation of a plurality of flight paths (B) which are generated on the basis of the instantaneous flight performance of the aircraft, with the totality of the flight paths (B) forming a tree-like hierarchical structure (FT) within which flight paths are connected via junction nodes (K), with a sequence of flight paths (B) which are connected via junction nodes (K) in successive hierarchy levels forming a potential escape flight path, and with the same group (S) of flight paths (B) originating from each node,

- checking of the potential escape flight paths for critical approach to the terrain making use of data from a terrain model until a safe escape flight path is determined,
- after determination of a safe escape flight path, a warning is emitted with or without a recommendation of a flight path, on the basis of the most recently determined safe escape flight path.

2. Method according to Claim 1, **characterized in that** the sequence of the checking of the potential escape flight paths for critical approach to the terrain is carried out using the following criteria:

- escape flight paths which are closest to the predicted flight path of the aircraft are checked first of all,
- if an escape flight path is found to be unsafe, the check is continued with the potential escape flight path which is closest to it.

3. Method according to Claim 1 or 2, **characterized in that** the flight paths (B) are generated such that they ensure flight close to the ground which is as effective as possible for military operations, within the ground obstruction framework and taking account of the terrain cover.

4. Method according to one of the preceding claims, **characterized in that** the flight paths (B) are generated such that they can be flown both by an operator, by an automatic system, or semi-automatically by an operator assisted by an automatic system.

5. Method according to one of the preceding claims, **characterized in that** the flight paths (B) are generated such that they have the same flight duration.

6. Method according to one of the preceding claims, **characterized in that** the flight paths (B) which originate from the same junction node in the same hierarchy level are generated such that they have different direction changes between -90 and +90 degrees.

7. Appliance for carrying out the method according to one of the preceding claims in order to prevent aircraft from colliding with the terrain, designed as follows:

- a unit for generation of a plurality of flight paths (B) which are generated on the basis of the instantaneous flight performance of the aircraft, with the totality of the flight paths forming a tree-like hierarchical structure (FT) within which flight paths (B) are connected via junction nodes, with a sequence of flight paths (B) which are connected via junction nodes in successive hierarchy levels forming a potential escape flight path, and with the same group (S) of flight paths (B) originating from each node,

- a memory unit which contains data from a terrain model of the region being flown over,
- a unit for checking the potential escape flight paths for critical approach to the terrain making use of data from the terrain model contained in the memory unit until a safe escape flight path is determined,
- a warning unit by means of which, once a safe escape flight path has been determined, a warning can be emitted with or without a recommendation of a flight path, on the basis of the most recently determined safe escape flight path.

## Revendications

1. Procédé pour éviter des collisions d'aéronefs avec le terrain avec les étapes suivantes du procédé :

- génération d'une multiplicité de trajectoires de vol (B), qui sont générées en se basant sur la performance de vol momentanée de l'aéronef, l'ensemble des trajectoires de vol (B) formant une structure hiérarchique arborescente (FT), à l'intérieur de laquelle les trajectoires de vol sont reliées par l'intermédiaire de noeuds de jonction (K), une séquence de trajectoires de vol (B) reliées par l'intermédiaire de noeuds de jonction (K) de niveaux hiérarchiques successifs, formant un itinéraire de vol d'évitement potentiel et le même groupe (S) de trajectoires de vol (B) partant de chaque noeud.
- vérification des itinéraires de vols d'évitements potentiels concernant des rapprochements critiques du terrain en recourant aux données d'un modèle du terrain jusqu'à ce qu'un itinéraire de vol d'évitement sûr soit déterminé,
- après détermination d'un itinéraire de vol d'évitement sûr, on fournit un avertissement avec ou sans recommandation d'un itinéraire de vol en se basant sur l'itinéraire de vol d'évitement sûr qui a été déterminé en dernier.

2. Procédé selon la revendication 1, **caractérisé en ce que** la succession des vérifications des itinéraires de vols d'évitements potentiels concernant des rapprochements critiques du terrain, résulte de l'application des critères suivantes :

- on vérifie d'abord les itinéraires des vols d'évitements les plus proches de l'itinéraire de vol prévu de l'engin volant,

- si on identifie un itinéraire de vol d'évitement comme étant peu sûr, alors on poursuit la vérification avec celui se trouvant le plus proche de cet itinéraire de vol d'évitement potentiel.

**3.** Procédé selon la revendication 1 ou 2, **caractérisé en ce que** les trajectoires de vol (B) sont générées de telle sorte que pour des interventions militaires aussi efficaces que possible, elles permettent un vol proche du sol dans le paysage alentour des obstacles du sol en tenant compte de l'abri du terrain.

**4.** Procédé selon une des revendications précédentes, **caractérisé en ce que** les trajectoires de vol (B) sont générées de telle sorte qu'elles puissent être reconnues par un opérateur de même que par un automate ou de manière semi-automatique par un opérateur avec l'aide d'un automate.

**5.** Procédé selon une des revendications précédentes, **caractérisé en ce que** les trajectoires de vol (B) sont générées de telle sorte qu'elles présentent la même durée de vol.

**6.** Procédé selon une des revendications précédentes, **caractérisé en ce que** les trajectoires de vol (B) partant du même noeud de jonction du même niveau hiérarchique sont générées de telle sorte qu'elles présentent différents changements de direction entre -90 et +90 degrés.

**7.** Appareil pour exécuter le procédé selon une des revendications précédentes pour éviter des collisions d'aéronefs avec le terrain avec le montage suivant :

- une unité pour la génération d'une multiplicité de trajectoires de vol (B), qui sont générées en se basant sur la performance de vol momentanée de l'aéronef, l'ensemble des trajectoires de vol formant une structure hiérarchique arborescente (FT), à l'intérieur de laquelle les trajectoires de vol (B) sont reliées par l'intermédiaire de noeuds de jonction, une séquence de trajectoires de vol (B) reliées par l'intermédiaire de noeuds de jonction de niveaux hiérarchiques successifs, formant un itinéraire de vol d'évitement potentiel et le même groupe (S) de trajectoires de vol (B) partant de chaque noeud.
- une unité de mémoire contenant les données d'un modèle de terrain de la région survolée,
- une unité pour la vérification des itinéraires de vols d'évitements potentiels concernant des rapprochements critiques du terrain en recourant aux données du modèle du terrain contenues dans l'unité de mémoire, jusqu'à ce qu'un itinéraire de vol d'évitement sûr soit déterminé,

- une unité d'alarme permettant, après détermination d'un itinéraire de vol d'évitement sûr, de fournir un avertissement avec ou sans recommandation d'un itinéraire de vol en se basant sur l'itinéraire de vol d'évitement sûr qui a été déterminé en dernier.

Fig. 1

Fig. 2

# Fig. 3

```
  ┌────────────────┐        ┌────────────────┐
  │   Momentaner   │        │   Momentane    │
  │  Flugzustand   │        │  Flugleistung  │
  └────────────────┘        └────────────────┘
           │                         │
           ▼                         ▼
  ┌──────────────────────────────────────────┐
  │       Bestimme Flugbahnen $f_i$           │
  │       für bestes Steigen und              │
  │       für Richtungsänderung $\Delta_i^\varphi$ │
  │     ($i$=Index der Flugbahnen;$0<i<n$)     │
  └──────────────────────────────────────────┘
                        │
                        ▼
  ┌──────────────────────────────────────────┐
  │  Vereine Flugbahnen $\{f_0,f_1,...,f_{n-1}\}$ zu │
  │       neuem "Fan-Tree" Segment            │
  └──────────────────────────────────────────┘
                        │
                        ▼
  ┌──────────────────────────────────────────┐
  │  Ergänze "Fan-Tree" an denjenigen         │
  │  Flugbahnen, die unter MSA enden          │
  │  um neue "Fan-Tree"-Segmente              │
  └──────────────────────────────────────────┘
                        │
                        ▼
  ┌──────────────────────────────────────────┐
  │      Ermittle Höhengewinn der             │
  │      neuen "Fan-Tree" Segmente            │
  └──────────────────────────────────────────┘
                        │
                        ▼
              ◇ Alle neuen Flugbahnen
                enden mit Höhe >= MSA ?
```

Akkumulierte Höhe

NEIN

JA

ENDE

Fig. 4

Fig. 5

EP 1 369 665 B1

Fig. 6

```
  ╭─ ── ─╮        ╭───────╮        ╭───────╮
 ( Aktiver )     (Momentaner)     (Momentane)
 ( Flugplan )    (Flugzustand)   (Fluglelstung)
 ╰(optional)╯     ╰───────╯        ╰───────╯
```

Ermitteln des
predizierten
Flugweges

Ermitteln des
Fan-Tree

Ermitteln der dem
predizierten Flugweg am
nächsten gelegenen
Flugbahnen im Fan-Tree

Prüfen des predizierten
Flugweges im "Fan-Tree"
auf kritische
Geländeannäherung

Flugweg ist sicher ?  — JA

NEIN

Prüfen der der kritischen
Flugbahn am nächsten
gelegenen Flugbahn
auf Geländekollision
evtl. fortsetzen der
Prüfung im nächsten,
höheren Segment

Sichere Flugbahn gefunden ?  — NEIN

JA

Vorwarnzeit ?

NEIN                JA

WARNUNG
und
Empfehlung des zuletzt
geprüften Ausweichflugwegs
als Konfliktlösung

VORWARNUNG

12

**EP 1 369 665 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20010023390 A